# NEW EUROPEAN PATENT SPECIFICATION

(11) **EP 0 696 293 B2**
(45) Date of publication and mention of the opposition decision: **17.06.2009**
(45) Mention of the grant of the patent: 24.05.2000
(21) Application number: 94914901.7
(22) Date of filing: 25.04.1994
(51) Int. Cl.: C08F 10/00, C08F 2/34

(54) **PROCESS FOR POLYMERIZING MONOMERS IN FLUIDIZED BEDS**
VERFAHREN ZUR POLYMERISATION VON MONOMEREN IN FLIESSBETTEN
PROCEDE DE POLYMERISATION DE MONOMERES DANS DES LITS FLUIDIFIES

(30) Priority: 26.04.1993 WO PCT/US93/03946; 20.05.1993 US 65250
(43) Date of publication of application: 14.02.1996
(60) Divisional application: 99118595.0
(73) Proprietor: Univation Technologies, LLC, Houston, TX 77056 (US)
(72) Inventor: DECHELLIS, Marc, Louis, Houston, TX 77058 (US); GRIFFIN, John, Robert, Baytown, TX 77520 (US); MUHLE, Michael, Elroy, Kingwood, TX 77345 (US)
(74) Representative: UEXKÜLL & STOLBERG
(86) International application number: PCT/US1994/004513
(87) International publication number: WO 1994/025497

(56) References cited:
- EP-A- 0 129 368
- EP-A- 0 206 794
- EP-A- 0 241 947
- EP-A- 0 279 863
- EP-A- 0 336 593
- EP-A- 0 535 582
- EP-A- 0 593 083
- WO-A-94/03509
- WO-A1-94/25495
- US-A- 4 588 790

## Description

### FIELD OF THE INVENTION

The present invention relates to a continuous process for the gas phase polymerization of olefins in a fluidized bed reactor. More particularly, the invention is directed to a gas phase polymerization process for polymerizing monomers in a fluidized bed reactor operating in a condensed mode. The invention is more specifically drawn to a condensed mode gas phase polymerization process utilizing as the catalyst a bulky ligand transition metal compound.

### BACKGROUND OF THE INVENTION

It is widely known that gas phase fluidized bed polymerization processes produce a diverse array of polymers. In such a process a continuous cycle is employed where in one part of the cycle, a cycling gas stream, otherwise known as a recycle stream or fluidizing medium, is heated in the reactor by the heat of polymerization. This heat is removed in another part of the cycle by a cooling system external to the reactor.

Generally in a gas fluidized bed process for producing polymer from monomers a gaseous stream containing one or more monomers is continuously cycled through a fluidized bed in the presence of a catalyst under reactive conditions. This gaseous stream is withdrawn from the fluidized bed and recycled back into the reactor. Simultaneously, polymer product is withdrawn from the reactor and new or fresh monomer is added to replace the polymerized monomer.

Conventionally in the past the temperature of the recycle stream entering the reactor could not be decreased below the dew point of the recycle stream. The dew point of the recycle stream is that temperature at which liquid condensate begins to form in the gaseous recycle stream. Later it was demonstrated as disclosed in U.S. Patent Nos. 4,543,399 and 4,588,790 to Jenkins, III, et al. that a recycle stream can be cooled to a temperature below the dew point in a fluidized bed polymerization process resulting in condensing a portion of the recycle stream. The resulting recycle stream containing entrained liquid is then returned to the reactor. U.S. Patent Nos. 4,543,399 and 4,588,790 to Jenkins, III, et al. are herein fully incorporated by reference. For the purposes of this patent application the process of purposefully introducing a recycle stream having a liquid and a gas phase into a reactor such that the weight percent of liquid based on the total weight of the recycle stream is greater than about 2.0 weight percent is defined to be operating a gas phase polymerization process in a "condensed mode".

The catalyst system described in Jenkins, III, et al. is a TiCl₃ based traditional Ziegler-Natta catalyst system. Using this catalyst system in a condensed mode operation results inevitably in process and product constraints as will become apparent later in this specification. The process limitations limit production rates and significantly increase the cost of producing polymers. Also, as a direct consequence of using these traditional catalysts in this process the polymers available for production are restricted to certain densities and melt indices.

Polymer production rates and characteristics can be controlled to give a desired melt index and density in a gas phase fluidized bed reactor. In operation of a gas phase fluidized bed reactor, the process is a dosed system. Changes in the process of one or more reactor conditions can lead to consequential changes elsewhere in the system. Therefore, great care is taken to avoid conditions which lead to chunking, sheeting, fluidized bed collapse, reaction termination and reactor shut-down. There are target values, determined by the polymer to be produced and the catalyst, for the operating temperature, the ratio of comonomer(s) to monomer and the ratio of hydrogen to monomer. Traditional catalyst systems and polymer produced therewith restrict these values, and as a direct consequence of this, drastically reduce production rates achievable for any given polymer being produced. Furthermore, these traditional catalysts and catalyst systems limit the type and characteristics of the polymer.

Therefore a need exists for a gas phase polymerization process that allows for the extension of the target values heretofore limited. Extending these values beyond that which was achievable in the past will allow.for the operation of a gas phase fluidized bed polymerization reactor at significantly higher production rates and of the production of polymer grades at a significantly reduced cost not heretofore envisaged.

### SUMMARY OF THE INVENTION

This invention relates to a continuous gas phase polymerization process for polymerizing alpha-olefins utilizing a metallocene supported on a particulate material in a gas phase fluidized bed reactor operating in a condensed mode as defined in claim 1.

This invention in another embodiment relates to a continuous process for the polymerization of alpha-olefin monomer and at least one copolymerizable alpha-olefin comonomer in a gas phase fluidized bed reactor. A recycle stream is passed through the reactor such that the recycle stream comprises a ratio of (Cₓ +H₂)/C_{y} of less than about 0.2, a dew point increasing component in an amount greater than about 2.0 mole percent and non-condensable inerts making up the balance of the recycle stream, where Cₓ, H₂ and C_{y} are the mole percent respectively of comonomer, hydrogen and monomer. A catalyst is introduced under reactive conditions into the reactor to polymerize the recycle stream into a polymer product that is withdrawn from the reactor. The recycle stream containing unreacted monomers is also withdrawn from the reactor and additional monomers are introduced into the recycle stream to replace monomers polymerized so as to maintain the ratio of the recycle stream. In the preferred embodiment the recycle stream is compressed and/or cooled to form a liquid phase and a gas phase, which are reintroduced into the reactor.

In a preferred embodiment that alpha-olefin monomer is ethylene. In another preferred embodiment the comonomer is a C₅ or a higher alpha-olefin.

It is the an object of this invention to provide a process for polymerizing olefins in a gas fluidized bed polymerization reactor at significantly higher production rates. It is a related object of this invention to provide a process that results in the increased cooling capability of a recycle stream. It is further related object of this invention to provide a polymerization process for producing polymers having a broader range of densities and melt indices. It is yet another object of this invention to provide a polymerization process that provides for even greater savings in energy, raw materials and capital expenditure.

### DETAILED DESCRIPTION OF THE INVENTION

This invention relates to the gas phase polymerization process for polymerizing olefins utilizing a metallocene supported on a particulate material in a gas phase fluidized bed polymerization reactor operating in a condensed mode. The invention provides for a significant increase in the production rate of polymer produced in a gas phase fluidized bed reactor. The invention further provides for the production of a broad range of polymers having improved characteristics at these significantly higher production rates. Traditional Ziegler-Natta catalysts are typically insoluble in hydrocarbon solvents For example, traditional Zegler-Natta catalysts are typically isolated by precipitation in a hydrocarbon solvent, such as isopentane. Surprisingly, a metallocene catalyst, being soluble in hydrocarbon solvents, polymerized olefins in a condensed mode process which utilizes a hydrocarbon solvent as the prefered condensable inert.

This invention is directed toward the gas phase polymerization or copolymerization reactions involving the polymerization of one or more of the alpha-olefin monomers having from 2 to 20 carbon atoms, preferably 2-15 carbon atoms. The invention is particularly well suited to the copolymerization reactions involving the polymerization of one or more of the monomers, for example alpha-olefin monomers of ethylene, propylene, butene-1, pentene-1, 4-methylpentene-1, hexene-1, octene-1, decene-1 and cyclic olefins such as styrene. Other monomers can include polar vinyl, dienes, norbornene, acetylene and aldehyde monomers. Preferably a copolymer of ethylene is produced such that the amount of ethylene and comonomer is adjusted to produce a desired polymer product Preferably the comonomer is an alpha-olefin having from 4 to 15 carbon atoms, more preferably 5 to 12 carbon atoms and most preferably 5 to 10 carbon atoms. In another embodiment ethylene is polymerized with at least two comonomers to form a terpolymer and the like.

The catalysts useful in the polymerization process of this invention are generally in the field of transition metal catalysis, which includes many transition metals of metallo-organic nature. Over the past few years a new catalyst technology has developed, which provides for the modification and/or control over the properties and characteristics of a polymer. This technology principally involves the use of single-site catalysts to produce a broad range of polymers generally having a narrow molecular weight distribution and a narrow composition distribution. The art has focused on the type of catalyst and catalyst system employed and product attributes produced therefrom, however, the surprising and unexpected benefits derived from these catalysts in a condensed mode gas phase polymerization process have gone unrecognized until now.

Selected metallo-organic catalysts and catalyst systems are suitable to produce polymer from selected gas compositions entering the reactor as the recycle stream. With reference to the catalyst, it is preferably a bulky ligand transition metal catalyst. The bulky ligand contains a multiplicity of bonded atoms, preferably carbon atoms, forming a group which may be cyclic with one or more optional heteroatoms. The bulky ligand may be a cyclopentadienyl derivative which can be mono- or poly-nuclear. One or more bulky ligands may be bonded to the transition metal atom. The transition metal atom is a Group IV, V or VI transition metal of the Periodic Table of Elements. Other ligands may be bonded to the transition metal, preferably detachable by a cocatalyst such as a hydrocarbyl or halogen leaving group. The catalyst is derivable from a compound represented by the formula:

[L]ₘ M [X]ₙ

wherein L is the bulky ligand; X is the leaving group, M is the transition metal and m and n are such that the total ligand valency corresponds to the transition metal valency. Preferably the catalyst is four co-ordinate such that the compound is ionizable to a 1⁺ valency state.

The ligands L and X may be bridged to each other and if two ligands L and/or X are present, they may be bridged. The metallocenes may be full-sandwich compounds having two ligands L which are cyclopentadienyl groups or half-sandwich compounds having one ligand L only which is a cyclopentadienyl group.

Certain types of metallocenes possess the necessary properties for the process of this invention. For the' purposes of this patent specification the term "metallocene" is herein defined to contain one or more cyclopentadienyl moiety in combination with a transition metal of the Periodic Table of Elements. The metallocene catalyst component is represented by the general formula (Cₚ)ₘMRₙR'ₚ wherein Cₚ is a substituted or unsubstituted cyclopentadienyl ring; M is a Group IV, V or VI transition metal; R and R' are independently selected halogen, hydrocarbyl group, or hydrocarboxyl groups having 1-20 carbon atoms; m = 1-3, n = 0-3, p = 0-3, and the sum of m + n + p equals the oxidation state of M. Various forms of the catalyst system of the metallocene type may be used in the polymerization process of this invention. Exemplary of the development of these metallocene catalysts for the polymerization of ethylene is found in the disclosure of U.S. Patent No. 4,937,299 to Ewen, et al. and EP-A-0 129 368 published July 26, 1989, both of which have been fully incorporated herein by reference. These publications teach the structure of the metallocene catalysts and includes alumoxane as the cocatalyst. There are a variety of methods for preparing alumoxane of which one described in U.S. Patent 4,665,208. Other cocatalysts may be used with metallocenes, such as trialkylaluminum compounds; or ionizing ionic activators or compounds such as, tri (n-butyl) ammonium tetra (pentafluorophenyl) boron, which ionize the neutral metallocene compound. Such ionizing compounds may contain an active proton, or some other cation associated with but not coordinated or only loosely coordinated to the remaining ion of the ionizing ionic compound. Such compounds are described in EP-A-0 277 003 and EP-A-0 277 004 both published August 3,1988 and are both herein fully incorporated by reference. Further, the metallocene catalyst component can be a monocyclopentadienyl heteroatom containing compound. This heteroatom is activated by either an alumoxane or an ionic activator to form an active polymerization catalyst system to produce polymers useful in this present invention. These types of catalyst systems are described in, for example, PCT International Publications WO 92/00333 published January 9, 1992, U.S. Patent Nos. 5,096,867 and 5,055,438, EP-A-0 420 436 and WO 91/04257 all of which are fully incorporated herein by reference. In addition, the metallocene catalysts useful in this invention can include non-cyclopentadienyl catalyst components, or ancillary ligands such as boroles or carbollides in combination with a transition metal. Additionally it is not beyond the scope of this invention that the catalysts and catalyst systems may be those described in U.S. Patent No. 5,064,802 and PCT publications WO 93/08221 and WO 93/08199 published April 29, 1993 all of which are herein incorporated by reference. All the catalyst systems described above may be, optionally, prepolymerized or used in conjunction with an additive or scavenging component to enhance catalytic productivity.

Metallocenes selected to have a combination of good comonomer incorporation, hydrogen sensitivity and polymerization activity are preferred. The preferred metallocenes are those having two or more substituents on at least one cyclopentadienyl group such as the mono- or bis-substituted cyclopentadienyl zirconocenes, specifically bis (1-methyl, 3-n-butyl cyclopentadienyl) zirconium dichloride. Metallocene catalysts that are excessively hydrogen sensitive or generate hydrogen may restrict the process to the making of high melt index materials. Too low an activity leads to high ash levels and necessitates the use of higher levels of stabilizers. Too high an activity could induce fouling. Too poor a comonomer incorporation may impact on the range of low density materials capable of being produced. A wide product range can be obtained by adjusting the feed gas stream or recycle stream composition for a particular metallocene. Mixtures of two or more different metallocenes can also be used.

The catalyst is supported on a suitable particulate material such as polymeric supports or inorganic-oxide such as silica, alumina or both. Methods of supporting the catalyst of this invention are described in U.S. Patent Nos. 4,808,561, 4,897,455, 4,937,301, 4,937,217, 4,912,075, 5,008,228, 5,086,025 and 5,147,949 and U.S. Application Serial Nos. 898,255, filed June 15,1992 and 885,170,'filed May 18, 1992, all of which are herein incorporated by reference. The preferred support method is generally disclosed in U.S. Patent No. 4,937,301 and related U.S. patents which are listed above.

Depending on how well the catalyst incorporates comonomer certain levels of comonomer may yield certain levels of polymer density. For example, highly incorporating catalyst can produce a low density polymer with a low level of comonomer. Similarly, depending on how the catalyst responds to hydrogen, certain levels of melt indices may be obtained. For the preferred alpha-olefin monomer ethylene, depending on the catalyst, the Cₓ/C₂ ratios are preferably less than about 0.2, and more preferably less than about 0.1, and as low as about 0.02 to provide a polymer having a density in the range of from about 0.86 g/cm³ to about 0.96 g/cm³, preferably about 0.88 g/cm³ to about 0.94 g/cm³ and most preferably between about 0.90 g/cm³ to about 0.935 g/cm³.

The advantages and benefits derived from this invention are equally seen in the polymers produced by this invention having a melt index of at least about' 0.05 dg/min and less than about 1000 dg/min, preferably less than 100 dg/min.

Ethylene is the preferred monomer and depending on the catalyst, the H₂/C₂ ratios are less than about 10,000 ppm, preferably less than about 5000 ppm and even more preferably less than about 1000 ppm and most preferably less than about 500 ppm to give a polymer with a melt index in the range of from about 0.05 dg/min to about 1000 dg/min, preferably about 0.05 dg/min to about 100 dg/min, more preferably greater than about 0.1 dg/min and most preferably greater than about 0.5 dg/min.

The reactivity ratios of the catalysts and catalyst systems of this invention are generally less than about 2, preferably less than about 1. Reactivity ratio is defined to be the mole ratio of comonomer to monomer in the recycle stream (Cₓ/C_{y}) divided by the mole ratio of comonomer to monomer (Cₓ/C_{y}) in the polymer produced, where Cₓ is the mole percent of comonomer and Cy is the mole percent of the monomer. The catalyst useful in this invention should preferably have a productivity of over 2000 grams of polymer per gram catalyst, preferably about 3000 grams of polymer per gram catalyst and most preferably greater than about 3500 grams of polymer per gram catalyst. The productivity is influenced by the ethylene partial pressure. The preferred mole percent of ethylene is from about 25 to about 75 mole percent and the monomer partial pressure is in the range of from about 75 psia (517 kPaa) to about 240 psia (1655 kPaa). It is desirable that the catalyst combines the monomers efficiently to provide a low ash level.

In the preferred embodiment, composition of the recycle stream, used to fluidize the bed in the reactor, is maintained at a ratio of (Cₓ+H₂)/C_{y} of less than about 0.2, preferably less than about 0.1, where Cₓ, H₂ and C_{y} are the mole percent respectively of the comonomer, the hydrogen and the alpha-olefin monomer. The recycle stream also contains preferably greater than about 5.0 mole percent of a dew point increasing component, not exceeding an amount which would disrupt fluidization. In the preferred embodiment the balance of the feed stream is made up of non-condensable inerts for example, nitrogen (N₂). The preferred alpha-olefin is ethylene and the preferred comonomers are pentene-1, hexene-1 or octene-1.

By the combination of the catalyst and the recycle stream composition described above high reactor productivities become possible for lower density or higher melt index copolymers. The process of this invention requires significantly less comonomer and hydrogen and permits greater cooling by the recycle stream. The higher production rates result from the improved cooling capability or capacity of the recycle stream with the above described recycle stream compositions of the process of this invention. This relates to the increased gas density of the recycle stream and to the higher specific enthalpy change of the stream also referred to as the enthalpy change from the inlet to the reactor conditions.

The closer the dew point gets to the reactor temperature the likelihood of the polymers sticking together is substantially higher. Sticking can also be caused by the fusing of the polymer particles at too high reactor temperatures. As a result of polymer sticking together fluidization instabilities can occur. This may cause chunking and downstream activities, extrusion and the like, may become more difficult. There is generally no accepted view as to what precisely causes chunking or sheeting. Obviously some fusing together of the polymer particles is involved, possibly because of insufficient heat transfer caused by inadequate fluidization in the fluidized bed. However, no clear correlations have thus far been found between individual process settings and measurements and the occurrence of chunking and sheeting. However, in the preferred embodiment it is best to maintain greater than at least about 5°F (2.8°C), more preferably in the preferred embodiment at least about 10°F (5.6°C), temperature differential between the dew point temperature and the reactor temperature.

Also, a broader density and melt index range of polymer may be produced in an efficient and cost effective manner as a direct result of reduced comonomer in the process of this invention.

Using the process of the invention relatively high reactor temperatures may be used benefiting the catalyst activity as well as increasing the reactor productivity by higher levels of cooling. The combination of lower comonomer levels, lower amounts of polymerization reactants overall, and high reactor temperatures can help achieve significant improvements in the process.

The higher reactor temperatures are believed to be associated with lower stickiness of the polymer particles in the fluidized bed arising from lower levels of low molecular weight amorphous materials and lower levels of dissolved comonomer in the polymer. Lower stickiness improves resin flow ability which also benefits downstream handling.

Preferably, the catalyst selection should provide hexane extractability less than about 2 wt%, preferably less than about 1 wt%. Hexane extractables can be determined in detail by referring to 21 CFR 177.1520 (d)(3)(ii). The catalyst selection is preferably such that the composition distribution breadth index (CDBI) of the polymer produced is over 50%, preferably over 60%, most preferably in the range of 60% to about 80%. CDBI, its measurement and calculation, is explained in detail in PCT patent application WO 93/03093 published February 18, 1993. Essentially CDBI is a measure of compositional distribution. CDBI is defined as the weight percent of copolymer molecules having a comonomer content within 50% (that is, 25% on each side) of the median total molar comonomer content.

The lower stickiness is also reflected in the improved ability of this process to make high melt index or low density polymers. Also, because of the lower stickiness the reactor temperature can be significantly increased above that achievable in the past such that the even further cooling capabilities are achievable.

The term "dew point increasing component" is used herein to exclude polymerizable monomers, including those which raise the dew point. For the purposes of this patent specification the term "dew point increasing component" includes saturated or non-polymerizable unsaturated hydrocarbons. Examples of suitable dew point increasing components are readily volatile liquid hydrocarbons, which may be selected from saturated hydrocarbons containing from 3 to 10 carbon atoms. Some suitable saturated hydrocarbons are propane, n-butane, isobutane, n-pentane, isopentane, neopentane, n-hexane, isohexane, and other saturated C₆ hydrocarbons, n-heptane, n-octane and other saturated C₇ and C₈ hydrocarbons or mixtures thereof. The preferred hydrocarbons are C₄ to C₆ saturated hydrocarbons. The preferred dew point increasing components are pentanes. Preferably, the stream contains from about 5 to about 60 mole percent of a dew point increasing component, preferably with the component having one carbon atom less than the comonomer or at least one carbon atom less than the comonomer. This may assist in achieving high reactor productivities. The dew point itself is calculated from the feed gas composition as analyzed for example by gas chromatography. In combination with actual recycle gas temperatures and pressures, the weight percent of condensed liquid in the recycle stream is also calculated.

The preferred method for measuring fluidized bed stability is by monitoring the fluidized bulk density, pressure measurements along the upper part of the fluidized bed or detecting formation of chunks in the reactor. The fluidized bulk density (FBD) is the ratio of the measured pressure drops upward across a centrally fixed portion of the reactor to the height of this fixed portion. It should be understood that under certain conditions known to those skilled in the art, a mean value may be measured which is greater or less than the actual bed bulk density. Fluidized bed stability is influenced by but difficult to link with particular operating conditions. Generally operating temperatures should be below the melting point and below the temperature at which the particles become sticky as explained previously. Using the invention it is believed that high reactor temperatures can be maintained at low densities, high melt index, with higher olefin comonomers and high levels of dew point raising components. In the preferred embodiment, it is important that no more condensable components should be added which would raise the dew point to such a level that the evaporation inside the reactor becomes incomplete. Applicants have discovered that as the concentration of the condensable component is increased in the gaseous stream flowing through the bed it is important that the ratio of the FBD to the settled bulk density is maintained above 0.59.

In practice of the process of this invention the weight percent of liquid in the recycle stream based on the total weight of the recycle stream is in the range of about 2 to about 50 weight percent, preferably greater than about 10 weight percent, and more preferably greater than about 15 weight percent and even more preferably greater than 20 weight percent and most preferable in the range between about 25 to about 40 weight percent.

In one preferred embodiment of this present invention, the entry point for the recycle stream is preferably below the fluidized bed so as to provide a uniform flow of the recycle stream to maintain the fluidized bed in a suspended condition and to ensure uniformity of the recycle stream passing upwardly throughout the fluidized bed. In another embodiment of the present invention, the recycle stream can be divided into two or more separate streams, one or more of which can be introduced directly into the fluidized bed provided that the gas velocity below and through the fluidized bed is sufficient to keep the bed suspended. For example, the recycle stream can be divided into a liquid and a gas stream which can then be separately introduced into the reactor.

The reactor pressure may vary from about 100 psig (689.7 kPag)to about 500 psig (3448.3 kPag), preferably in the range of about 200 psig (1379.3 kPag) to about 400 psig (2758.6 kPag) and most preferably in the range of about 250 psig (1724.1 kPag) to about 350 psig (2413.8 kPag). Increasing catalyst activities combined with good comonomer incorporation and hydrogen sensitivity may enable lowering of the pressure overall or of the ethylene partial pressure. Typically reactor temperatures are in the range of about 130°F (54.4°C) to about 250°F (121.1°C), preferably in the range of about 140°F (60°C) to about 220°F (104.4°C), more preferably in the range of about 145°F (62.7°C) to about 215°F (101.7°C), even more preferably in the range of about 155°F (68.3°C) to about 200°F (93.3°C) and most preferably in the range of about 165°F (73.9°C) to about 185°F (85°C). It is preferable that the difference between the dew point temperature and the inlet temperature is less than 40°C, preferably less than 30°C, even more preferably less than 20°C and most preferably in the range of 5°C, preferably 10°C, to about 15°C. The superficial gas velocity of the gas flow through the reactor generally exceeds the minimum flow required for fluidization which is typically from about 0.2 ft/sec (0.061 m/s) to 0.5 fl/sec (0.153 m/s). Preferably, the superficial gas velocity is maintained not less than about 0.7 ft/sec (0.214 m/s), and even more preferably not less than 1.0 ft/sec (0.305 m/s). The superficial gas velocity should preferably not exceed 5.0 ft/sec (1.5 m/s).

### EXAMPLES

In order to provide a better understanding of the present invention including representative advantages and limitations thereof, the following examples are offered.

### EXAMPLE 1

In the examples different catalysts are used. For the actual comparative run C-1 and extrapolated data run C-1A of Table 1 a titanium based catalyst is used similar to that in U.S. Patent No. 4,543,399. The catalyst used is a complex of tetrahydrofuran, magnesium chloride and titanium chloride reduced with diethyl aluminum chloride (diethyl aluminum chloride-to-tetrahydrofuran molar ratio of 0.42) and tri-n-hexyl aluminum (tri-n-hexyl aluminum-to-tetrahydrofuran molar ratio of 0.28) impregnated on triethyl aluminum treated silicon dioxide. The activator is triethyl aluminum (TEAL).

For the actual runs 2A and 8A of Table 3 and extrapolated data runs 2-6 of Table 1, runs 8-13 of Table 3 and runs 14-18 of Table 4 the catalyst was based on a metallocene with a di-substituted cyclopentadienyl rings as follows:

To a clean, dry N₂ mixer were added 800 grams of silica dehydrated at 200°C with an LOI (OH content) of approximately 3 wt%. 2000 ml of toluene is rapidly added to the vessel. 1060 ml of 30 wt% MAO based on the Al-content is added to the vessel while mixing. The jacket temperature is increased such that the internal temperature is 155°F. The mixture is held at this temperature for 4 hours while mixing. Then there is added rapidly to the reactor with mixing, 23 grams of bis(1-methyl, 3-n-butyl Cp)ZrCl₂ dissolved in approximately 500 ml of toluene. The reactor temperature is again held at 155°F for 1 hour while continuing mixing. Finally the catalyst solids are dried with nitrogen under vacuum at 155°F until the solids are free-flowing and have a volatile content of 10 wt% or less.

The catalyst for actual run 7A of Table 3 and extrapolated data run 7 of Table 1 was prepared as follows:

All steps are performed in a dry box using dry, degassed solvents. Accordingly there is added to a clean, dry, 1 liter round bottom flask 300 ml of a 25 wt% solution of triethyl aluminum in heptane. 300 g of silica dehydrated at 800°C is added over a period of 15 minutes while stirring. The silica is Davison 948. The solvent is then removed in vacuo to obtain a free flowing solid. 12.0 g of tetrakis perfluorophenyl boron dimethylanilinium salt is then dissolved in 800 ml of hot (100°C) toluene in a 2 liter round bottom flask while stirring. This is added via a cannula to a 3 liter round bottom flask containing 300 g TEAL treated silica as obtained above slurried with a mechanical overhead stirrer in 500 ml of hot (100°C) toluene. The mixture is allowed to cool to room temperature and 1200 ml of pentane is added while stirring with a mechanical overhead stirrer. The solvent is decanted and residual solvent removed in vacuo to obtain a free flowing solid. The supported activator prepared above is then slurried in 500 ml pentane, then 5.43 g of bis(n-butylcyclopentadienyl) dimethyl zirconium is added, dissolved in 200 ml pentane. The solvent is decanted and residual solvent is removed in vacuo to obtain a free flowing solid.

Runs C-1 of Table 1 and 2A, 7A and 8A of Table 3 are based on actual tests. The data shown by runs C-1A, 2, 3, 4, 5, 6 and 7 of Table 1, runs 8-13 of Table 2 and runs 14-18 of Table 4 were prepared by extrapolating information from actual operations by using thermodynamic equations well known in the art to project actual conditions and production rates. Each run is explained below:

**TABLE 1**

| **RUN** | | **C-1** | **C-1A** | **2*** | **3** | **4** | **5** | **6** | **7** |
|---|---|---|---|---|---|---|---|---|---|
| MI (dg/min) | | 3.39 | 3.39 | 1.61 | 1.61 | 1.61 | 1.61 | 1.61 | 18.7 |
| Density (g/cm³) | | 0.9168 | 0.9168 | 0.9175 | 0.9175 | 0.9175 | 0.9175 | 0.9175 | 0.9222 |
| Temp (°C) | | 78.9 | 78.9 | 78.9 | 78.9 | 78.9 | 78.9 | 78.9 | 79.4 |
| Temp (°F) | | 174 | 174 | 174 | 174 | 174 | 174 | 174 | 175 |
| Pressure (kPag) | | 2110 | 2110 | 2110 | 2110 | 2110 | 2110 | 2110 | 2110 |
| Pressure (psig) | | 306 | 306 | 306 | 306 | 306 | 306 | 306 | 306 |
| C₂ Pressure (kPaa) | | 719 | 719 | 881 | 881 | 881 | 881 | 881 | 665 |
| C₂ Pressure (psia) | | 104.2 | 104.2 | 127.7 | 127.7 | 127.7 | 127.7 | 127.7 | 96.4 |
| Comonomer | | Hexene | Hexene | Hexene | Hexene | Hexene | Hexene | Hexene | Hexene |
| Cx/C2 | | 0.132 | 0.132 | 0.0157 | 0.0157 | 0.0157 | 0.0157 | 0.0157 | 0.0152 |
| H2/C2 | | | | | | | | | |
| | mole/mole | 0.364 | 0.364 | - | - | - | - | - | - |
| | mole ppm/mole | - | - | 2.4 | 2.4 | 2.4 | 2.4 | 2.4 | 3.95 |
| Ethylene (mole%) | | 32.5 | 32.5 | 39.8 | 39.8 | 39.8 | 39.8 | 39.8 | 30.1 |
| iC5 (mole %) | | 1.0 | 10.3 | 1.6 | 8.5 | 11 | 13.5 | 21.1 | 14 |
| H2 (mole %) | | 11.8 | 11.8 | 0.010 | 0.010 | 0.010 | 0.010 | 0.010 | 0.012 |
| N2 (mole %) | | 48.6 | 39.5 | 56.9 | 50.1 | 47.6 | 45.1 | 37.6 | 54.3 |
| Cx (mol%) | | 4.3 | 4.3 | 0.6 | 0.6 | 0.6 | 0.6 | 0.6 | 0.5 |
| Prod Rate (lb/hr) | | 57400 | 95500 | 30500 | 50000 | 65000 | 80000 | 131400 | 80000 |
| Prod Rate (tons/hr) | | 26.1 | 43.2 | 13.9 | 22.7 | 30.0 | 36.4 | 59.7 | 36.4 |
| % Condensed | | 11.6 | 23.05 | 0.00 | 4.70 | 10.20 | 15.47 | 30.59 | 15.66 |
| T inlet (°C) | | 40.4 | 40.6 | 40.4 | 40.6 | 40.5 | 40.7 | 40.6 | 40.4 |
| T Inlet (°F) | | 104.8 | 105.0 | 104.8 | 105.0 | 104.9 | 105.3 | 105.0 | 104.8 |
| T dew (°C) | | 64.3 | 73.3 | 18.4 | 46.9 | 53.7 | 59.4 | 73.4 | 59.4 |
| T dew (°F) | | 147.7 | 164.0 | 65.1 | 116.4 | 128.6 | 139.0 | 164.2 | 139.0 |
| Gas Velocity (ft/sec) | | 2.33 | 2.33 | 2.33 | 2.33 | 2.33 | 2.33 | 2.33 | 2.33 |
| Gas Velocity (m/sec) | | 0.71 | 0.71 | 0.71 | 0.71 | 0.71 | 0.71 | 0.71 | 0.71 |
| Catalyst Productivity g PE per g Cat | | 3500 | 3500 | 3850 | 3850 | 3850 | 3850 | 3850 | 3490 |
| Gas Density (lb/ft³) | | 1.32 | 1.57 | 1.37 | 1.57 | 1.64 | 1.71 | 1.93 | 1.70 |
| Gas Density (kg/m³) | | 21.1 | 25.1 | 22.0 | 25.1 | 26.3 | 27.4 | 30.9 | 27.2 |
| Spec. Enthalpy (Btu/lb) | | 45.7 | 64.6 | 23.5 | 34.0 | 42.4 | 50.3 | 73.5 | 50.6 |
| Spec. Enthalpy (Cal/g) | | 25.4 | 35.9 | 13.0 | 18.9 | 23.6 | 27.9 | 40.8 | 28.1 |

| | | | | | | | | | |
|---|---|---|---|---|---|---|---|---|---|
| * not according to the invention | | | | | | | | | |

### Run C-1

Run C-1 of Table 1 is actual plant data in which substantially the same process and catalyst systems as disclosed in U.S. Patent Nos. 4,543,399 and 4,588,790.

### Run C-1A

Run C-1A of Table 1 contains data extrapolated from run C-1 above. This run illustrates for this particular grade material the preferred dew point limit is reached. That is the difference between the reactor temperature and the dew point temperature is about 10°F (5.6°C). At this point increasing the dew point to approach reactor temperature any further may result in instabilities in the fluidized bed, possibly sheeting and chunking as a result.

### Run 2 and 2A

Run 2 of Table 1 contains data extrapolated from run 2A of Table 3. Run 2A is actual pilot plant data. Run 2 illustrates this data when scaled up to the reactor used in run C-1. The catalyst used is as described previously.

As one can see the Cₓ/C₂ and H₂/C₂ ratios are extremely low as compared with runs C-1 and C-1A.

### Runs 3-6

Runs 3-6 illustrate extrapolated data where the level of dew point increasing component, in this particular example, isopentane (i-C₅) is used, is increased within the recycle stream composition. The amount of i-C₅ increases from 1.6 mole % in run 2 to 21.1 mole % in run 6. In so doing the dew point steadily increases such that the dew point limit of 10°F (5.6°C) is reached while the production rate for the same polymer grade is dramatically increased. This figure is well above the limit of run C-1A. Note that the reactor and inlet temperature, pressure and gas velocity remain constant. Also note that the gas densities are much higher for the runs illustrating the process of this invention as are the cycle gas enthalpy changes. If the reactor temperature were raised to 185°F (85°C) and the dew point raised to 174.7°F (79.3°C), a further increase in production rate up to 167,000 Ib/hr (76.0 tons/hr) could be obtained.

### Runs 7 and 7A

Run 7 of Table 1 contains data extrapolated from actual pilot plant run data shown in run 7A of Table 3. The catalyst system has been changed as described previously. As the results show, the increases in production rate are achievable with different metallocene catalyst systems.

**TABLE 2**

| **RUN** | | **8*** | **9** | **10** | **11** | **12** | **13** |
|---|---|---|---|---|---|---|---|
| MI (dg/min) | | 1.05 | 1.05 | 1.05 | 1.05 | 1.05 | 1.05 |
| Density (g/cm³) | | 0.918 | 0.918 | 0.918 | 0.918 | 0.918 | 0.918 |
| Temp (°C) | | 78.9 | 78.9 | 78.9 | 78.9 | 78.9 | 78.9 |
| Temp (°F) | | 174 | 174 | 174 | 174 | 174 | 174 |
| Pressure (kPag) | | 2069 | 2069 | 2069 | 2069 | 2069 | 2069 |
| Pressure (psig) | | 300 | 300 | 300 | 300 | 300 | 300 |
| C₂ Pressure (kPaa) | | 1090 | 1090 | 1090 | 1090 | 1090 | 8.70 |
| C₂ Pressure (psia) | | 158.1 | 158.1 | 158.1 | 158.1 | 158.1 | 126.2 |
| Comonomer | | Octene | Octene | Octene | Octene | Octene | Octene |
| Cx/C2 | | 0.009 | 0.009 | 0.009 | 0.009 | 0.009 | 0.009 |
| H2/C2 | | | | | | | |
| | mole/mole | - | - | - | - | - | - |
| | mole ppm/mole | 2.00 | 2.00 | 2.00 | 2.00 | 2.00 | 2.00 |
| Ethylene (mole%) | | 50.2 | 50.2 | 50.2 | 50.2 | 50.2 | 40.1 |
| iC5 (mole %) | | 1 | 7.5 | 10.5 | 13 | 16 | 17.5 |
| H2 (mole %) | | 0.010 | 0.010 | 0.010 | 0.010 | 0.010 | 0.008 |
| N2 (mole %) | | 47.4 | 41.0 | 38.0 | 35.5 | 32.6 | 41.1 |
| Cx (mol%) | | 0.5 | 0.5 | 0.5 | 0.5 | 0.5 | 0.4 |
| Prod Rate (lb/hr) | | 37400 | 50600 | 63800 | 79200 | 96800 | 103400 |
| Prod Rate (tons/hr) | | 16.8 | 23.0 | 29.0 | 36.0 | 44.0 | 47.0 |
| % Cond | | 1.10 | 4.94 | 9.89 | 15.24 | 21.14 | 23.28 |
| T Inlet (°C) | | 40.1 | 40.8 | 40.9 | 40.4 | 40.9 | 40.6 |
| T Inlet (°F) | | 104.1 | 105.5 | 105.7 | 104.8 | 105.6 | 105.1 |
| T dew (°C) | | 49.9 | 60.8 | 65.4 | 69.2 | 73.4 | 73.5 |
| T dew (°F) | | 121.9 | 141.4 | 149.8 | 156.5 | 164.1 | 164.3 |
| Gas Velocity (ft/sec) | | 2.33 | 2.33 | 2.33 | 2.33 | 2.33 | 2.33 |
| Gas Velocity (m/sec) | | 0.71 | 0.71 | 0.71 | 0.71 | 0.71 | 0.71 |
| Cat Productivity gPE per g cat | | 3630 | 3630 | 3630 | 3630 | 3630 | 2900 |
| Gas Density (lb/ft³) | | 1.34 | 1.54 | 1.62 | 1.68 | 1.77 | 1.78 |
| Gas Density (Kg/m³) | | 21.4 | 24.6 | 25.9 | 27.0 | 28.4 | 28.6 |
| Spec. Enthalpy (Btu/lb) | | 29.8 | 35.3 | 42.5 | 50.7 | 59.1 | 62.7 |
| Spec. Enthalpy (cal/g) | | 16.6 | 19.6 | 23.6 | 28.2 | 32.8 | 34.8 |

| | | | | | | | |
|---|---|---|---|---|---|---|---|
| * not according to the invention | | | | | | | |

### Runs 8-13

Run 8 contains data extrapolated from the actual pilot plant data shown in run 8A of Table 3. The catalyst system used is the same as used in runs 2-6 of Table 1. However, the comonomer for runs 8A and 8-13 is octene-1.

Again, as the amount of the dew point increasing component increased the production rate is increased steadily such that at the preferred dew point limit the rate of production is 103,400 lb/hr (47.0 tons/hr).

**TABLE 3**

| **RUN** | **2A** | **7A** | **8A** |
|---|---|---|---|
| **REACTOR PROPERTIES** | | | |
| Melt Index (dg/min) | 1.61 | 18.7 | 1.05 |
| Density (g/cm³) | 0.9175 | 0.9222 | 0.9180 |
| MIR | 18.8 | 20.2 | 18.1 |
| **PHYSICAL PROPERTIES** | | | |
| Bulk Density (lb/ft³) | 29.8 | 24.6 | 29.1 |
| Bulk Density (kg/m³) | 477 | 394 | 466 |
| Avg Particle Size (Inch) | 0.0281 | 0.0331 | 0.0308 |
| Avg Particle Size (cm) | 0,011 | 0,0130 | 0,0122 |
| Fines (%) thru 120 mesh | 0.15 | 1.14 | 0.58 |
| Ash (ppm) | 243 | 343 | 186 |
| **REACTOR CONCENTRATIONS** | | | |
| Ethylene (mole %) | 39.8 | 30.05 | 50.2 |
| Octene (mole %) | - | - | 0.452 |
| Hexene (mole %) | 0.62 | 0.46 | - |
| Hydrogen (mole %) | 0.0096 | 0.0118 | 0.0100 |
| Nitrogen (mole %) | 58.7 | 68.1 | 47.8 |
| C6/C2 Mole Ratio | 0.0157 | 0.0152 | - |
| C₈/C₂ Mole Ratio | - | - | 0.0090 |
| H2/C2 Mole Ratio | 0.00024 | 0.00039 | 0.00020 |
| TEAL (ppm) | 78 | 38 | 78 |
| **REACTOR CONDITIONS** | | | |
| Production Rate (lb/hr) | 59.8 | 43.8 | 57.0 |
| Production Rate (kg/hr) | 27.2 | 19.9 | 25.9 |
| Reactor Temp (°C) | 78.7 | 79.7 | 78.9 |
| Reactor Temp (°F) | 173.6 | 175.4 | 174.1 |
| Catalyst Prod (Lb/Lb) (Kg/Kg) | 3850 | 3490 | 3630 |
| Bed Weight (Kg) | 140 | 122 | 108 |
| Bed Weight (lb) | 307 | 268 | 237 |
| Reactor Res Time (hr) | 5.1 | 6.1 | 4.1 |
| Gas Velocity (m/sec) | 0.51 | 0.52 | 0.52 |
| Gas Velocity (ft/sec) | 1.67 | 1.7 | 1.7 |
| Pressure (kPag) | 2069 | 2069 | 2069 |
| Pressure (psig) | 300 | 300 | 300 |

The range of polymers which have in the past been so obtained is limited. At a density below about 0.910 g/cm³ the polymer granules in the reactor become sticky and the reactor temperatures may have to be lowered, the same can be said for polymer granules at a density greater than 0.910 g/cm³ and a melt index greater than about 100 dg/min, preferably greater than 200 dg/min, even further limiting the scope for adding a dew point increasing component thus, resulting in decreased reactor production rates. Of course one could lower the ethylene partial pressure to compensate for this but then the catalyst activity is lowered by the effect of lower ethylene partial pressures. Similar constraints are encountered when seeking to raise the melt index.

### EXAMPLE 2

Now referring to Table 4, run 14 is actual plant data using the condensed mode process with a metallocene catalyst prepared from 200°C silica having a water content of 4.1 weight percent. This catalyst was prepared by mixing 229 pounds 103,87 kg of silica with 310 pounds 140,6 kg of a 30 percent by weight toluene solution of methyl alumoxane. An additional 450 pounds 204,12 kg of toluene were added and the mixture held at 146°F 63,3°C for 2 hours after which 6.20 pounds 2,81 kg of the bis-(n-butyl cyclopentadienyl) zirconium dichloride was added and allowed to mix for one hour. The catalyst was decanted and solvent exchanged with hexane several times. It was then dried at 150°F 65,5°C to a free flowing powder. The final catalyst weight was 340 pounds 154,22 kg. The final catalyst had a zirconium loading of 0.37% and aluminum loading of 12.5%.

### Polymerization Conditions

**TABLE 4**

| **RUN** | **14** |
|---|---|
| MI (dg/min) | 0.85 |
| Density (g/cc) | 0.9208 |
| Temp (°C) | 73.9 |
| Temp (°F) | 165 |
| Pressure (kPag) | 2207 |
| Pressure (psig) | 320 |
| C2 Pressure (kPaa) | 719 |
| C2 Pressure (psia) | 204.5 |
| Comonomer | Hexene |
| Cx/C2 | 0.020 |
| H2/C2 | |
| mole/mole | - |
| mole ppm/mole | 1.19 |
| Ethylene (mole %) | 61.1 |
| iC5 (mole %) | 12.9 |
| H2 (mole %) | 0.0073 |
| N2 (mole %) | 25.9 |
| Cx (mole %) | 1.23 |
| Prod Rate (Ib/hr) | 50040 |
| Prod Rate (tons/hr) | 22.7 |
| Pct Condensed | 19.3 |
| T inlet (°C) | 39.7 |
| T inlet (°F) | 103.4 |
| T dew (°C) | 55.9 |
| T dew (°F) | 132.6 |
| Gas Velocity (ft/sec) | 1.98 |
| Gas Velocity (m/sec) | 0.60 |
| Catalyst Productivity g PE/g Cat | 2880 |
| Gas Density (Ib/ft³) | 1.84 |
| Gas Density (kg/m³) | 29.4 |
| Spec Enthalpy (BTU/lb) | 53.1 |
| Spec Enthalpy (Cal/g) | 29.5 |

### EXAMPLE 3

Now referring to Table 5, extrapolated data for runs 15-19. The same catalyst and setup was used as for run 2 of Example 1. This example illustrates the effect of a particular dew point increasing component Different components were used to raise the dew point to 10°F (5.6°C)below the reactor temperature. The cooling capacity of the recycle stream and reactor productivity were then compared. It can be seen that the lower molecular weight condensable hydrocarbons tend to permit higher reactor production rates. This may also be coupled with lower solubility in the polymer particles of these hydrocarbons and less effect on the polymer melting point which could impact on the fluidized bed stability at a high reactor operating temperature.

**TABLE 5**

| **RUN** | | **15** | **16*** | **17** | **18*** | **19*** |
|---|---|---|---|---|---|---|
| MI (dg/min) | | 1.61 | 1.61 | 1.61 | 1.61 | 1.61 |
| Density (g/cm³) | | 0.9175 | 0.9175 | 0.9175 | 0.9175 | 0.9175 |
| Temp (°C) | | 78.9 | 78.9 | 78.9 | 78.9 | 78.9 |
| Temp (°F) | | 174 | 174 | 174 | 174 | 174 |
| Pressure (kPag) | | 2110 | 2110 | 2110 | 2110 | 2110 |
| Pressure (psig) | | 306 | 306 | 306 | 306 | 306 |
| C₂ Pressure (kPaa) | | 881 | 881 | 881 | 881 | 881 |
| C₂ Pressure (psia) | | 127.7 | 127.7 | 127.7 | 127.7 | 127.7 |
| Comonomer | | Hexene | Hexene | Hexene | Hexene | Hexene |
| Catalyst Prod (lb/lb) | | 3850 | 3850 | 3850 | 3850 | 3850 |
| Cx/C2 | | 0.0157 | 0.0157 | 0.0157 | 0.0157 | 0.0157 |
| H2/C2 | | | | | | |
| | mole/mole | - | - | - | - | - |
| | mole ppm/mole | 2.4 | 2.4 | 2.4 | 2.4 | 2.4 |
| Ethylene (mol%) | | 39.8 | 39.8 | 39.8 | 39.8 | 39.8 |
| Nitrogen (mol%) | | 37.6 | 21.1 | 41.9 | 51.6 | 49.9 |
| Hexene (mol%) | | 0.6 | 0.6 | 0.6 | 0.6 | 0.6 |
| Hydrogen (mol%) | | 0.010 | 0.010 | 0.010 | 0.010 | 0.010 |
| Condensible | | Isopentane | Isobutane | Pentane | Hexane | Isohexane |
| Cond Cone (mol%) | | 21.1 | 40.2 | 15.7 | 5.8 | 7.5 |
| Prod Rate (Ib/hr) | | 131400 | 187709 | 113500 | 70840 | 78760 |
| Prod Rate (tons/hr) | | 59.7 | 85.3 | 51.6 | 32.2 | 35.8 |
| % Cond | | 30.59 | 41.80 | 25.68 | 13.90 | 16.78 |
| T inlet (°C) | | 40.6 | 40.6 | 40.6 | 40.7 | 40.5 |
| T inlet (°F) | | 105.0 | 105.0 | 105.0 | 105.2 | 104.9 |
| T deW (°C) | | 73.4 | 73.3 | 73.2 | 73.2 | 73.2 |
| T dew (°F) | | 164.2 | 164.0 | 163.7 | 163.8 | 163.8 |
| Gas Density (lb/ft³) | | 1.93 | 2.06 | 1.80 | 1.57 | 1.63 |
| Gas Density (kg/m³) | | 30.9 | 32.9 | 28.9 | 25.2 | 26.0 |
| Specific Enthalpy (Btu/Ib) | | 73.5 | 80.0 | 67.9 | 48.4 | 52.1 |
| Specific Enthalpy (cal/g) | | 40.8 | 44.4 | 37.7 | 26.9 | 28.9 |

| | | | | | | |
|---|---|---|---|---|---|---|
| * not according to the invention | | | | | | |

While the present invention has been described and illustrated by reference to particular embodiments thereof, it will be appreciated by those of ordinary skill in the art that the invention lends itself to variations not necessarily illustrated herein. For example, it is not beyond the scope of this invention to reduce the temperature of a recycle stream by employing refrigerator units or operating two or more reactors in series with the same or different catalyst. For this reason, then, references should be made solely to the appended claims for purposes of determining the true scope of the present invention.

## Claims

1. A continuous gas phase polymerization process for polymerizing alpha-olefin(s) utilizing a metallocene catalyst supported on a particulate material in a gas phase fluidized bed reactor wherein a recycle stream having a liquid and a gas phase is introduced to the reactor such that the weight percent of liquid based on the total weight of the recycle stream is greater than 2.0 weight percent, and the recycle stream comprises a dew point increasing component in art amount greater than 2.0 mole percent.

2. The process in accordance with claim 1 wherein a recycle stream passing through a fluidized bed in said reactor comprises a dew point increasing component in an amount of 5 to 60 mole percent, said component having at least one carbon atom less than the highest alpha-olefin in the stream.

3. The process in accordance with claim 2 wherein said recycle composition contains a comonomer and is maintained at a ratio of Cₓ/C_{y} of less than 0.2. where Cₓ and C_{y} are the mole percent of comonomer and monomer and comprises from 5 to 40 mole percent of the dew point increasing component.

4. The process in accordance with claim 3 wherein the recycle stream further comprises hydrogen (H₂) in a mole of ratio H₂/C_{y} of less than 0.01, in an amount of from 10 mole ppm to 10,000 ppm.

5. The process in accordance with claims 3 and 4 wherein the composition of said recycle stream is at a ratio of (Cₓ + H₂)/C_{y} of less than 0.2, preferably less than 0.1.

6. The process in accordance with any of the preceding claims wherein the weight percent of liquid based on the total weight of the recycle stream is greater than 2.5 percent, 5 weight percent to 50 weight percent, especially being over 20 weight percent based on the total weight of the recycle stream.

7. The process in accordance with any of the preceding claims wherein the metallocene catalyst has a reactivity ratio less than 2.

8. The process in accordance with any of the preceding claims wherein the metallocene catalyst productivity is greater than 2000 grams of polymer per gram of said catalyst.

9. The process in accordance with any of the preceding claims wherein the mole percent of alpha-olefin monomer is from 10 to 90 percent preferably from 20 to 80 percent, preferably with the most partial pressure in the range of from 70 psia (482.8 kPaa) to 240 psia (16552 kPaa).

10. The process in accordance with claim 9 wherein the recycle stream further comprises nitrogen in an amount from 5 to 50 mole percent.

11. The process in accordance with claim 9 wherein said polymer product has a CDBI greater than 50 percent and/or has a density in the range of from 0.850 g/cm³ to 0.970 gr/ cm³ and/or has a melt index of at least 0.01 dg/min and less than 1000 dg/min.

12. The process in accordance with any of claims 3 to 11 wherein said at least two alpha-olefin monomers are C₄ and C₂ alpha-olefins in the ratio of from 0.0001 to 0.2 or wherein said at least two alpha-olefin monomers are C₅ and C₂ alpha-olefins in the ratio of from 0.001 to 0.15 or wherein said at least two alpha-olefin monomers are C₆ and C₂ alpha-olefins in the ratio of from 0.001 to 0.1 or wherein said at least two alpha-olefin monomers are C₈ and C₂ alpha-olefins in the ratio of from 0.001 to 0.05.

13. The process in accordance to claim 1 for the polymerization of ethylene and at least one copolymerizable alpha-olefin comonomer having from 3 to 15 carbon atoms in the gas phase fluidizationd bed reactor operating in a condensed mode, said process comprising the steps of:
a) passing the recycle stream through a fluidized bed in said reactor, at a ratio of Cₓ/C₂ of less than 0.2, preferably less than 0.1, with the dew point increasing component in an amount greater than 2.0 mole percent and optionally non-condensable inerts making the balance of said recycle stream, where Cₓ and C₂ are the mole percent respectively of comonomer and ethylene ;
b) introducing the metallocene catalyst under reactive conditions into said reactor to polymerize said recycle stream into a polymer product ;
c) withdrawing said recycle stream containing unreacted monomers from the reactor;
d) introducing into said recycle stream additional monomers to replace monomers polymerized to maintain said ratio in said recycle stream;
e) re-introducing said recycle stream into said reactor ; and
f) withdrawing said polymer from said reactor.

14. The process in accordance with claim 13 wherein said metallocene catalyst is used with an alumoxane or an ionic activated complex.

15. The process in accordance with claims 13 or 14 wherein the comonomer is hexene-1 and the ractivity ratio is less than 2, the density of the polymer product is in the range of of 0.88 g/cm³ to 0.970 g/cm³ and a melt index of 0.1 to 1000 dg/min or wherein the comonomer is octene -1 and the reactivity ratio is less than 1, the density of the polymer product is in the range of 0.88 g/cm³ to 0.97 g/cm³ and a melt index of 0.1 to 1000 dg/min.

16. The process in accordance with any of claims 13 to 15 wherein the mole ratio of H₂/C₂ is less than 0.01.

17. The process in accordance to claim 1 for the polymerization of ethylene and at least one copolymerizable alpha-olefin comonomer having from 3 to 15 carbon atoms in the gas phase fluidized bed reactor, said process comprising the steps of :
a) passing the recycle steam through said reactor at a ratio of (Cₓ+H₂)/C₂ of less than 0.2, with a dew point increasing component in an amount greater than 2.0 mole percent and non-condensable inerts making up the balance of said recycle stream, where Cₓ, H₂ and C₂ are the mole percent respectively of comonomer, hydrogen and ethylene ;
b) introducing the metallocene catalyst under reactive conditions into said reactor to polymerize said recycle stream into a polymer product ;
c) withdrawing said recycle stream containing unreacted monomers from the reactor ;
d) compressing and cooling said recycle stream to form a liquid phase and a gas phase such that the weight percent of liquid based on the total weight of the recycle stream is greater than 10 and re-introducing said recycle stream into said reactor;
e) introducing into said recycle stream additional monomers to replace monomers polymerized to maintain said ratio of said recycle steam, and
f) withdrawing said polymer from said reactor.

18. The process in accordance with claim 17 wherein the liquid and the gas are introduced separately into the reactor.

19. The process in accordance with claim 17 or 18 wherein the polymer product has a density less than 0.910 g/cm³ and/or a melt index greater than 3 dg/min.

## Patentansprüche

1. Kontinuierliches Gasphasenpolymerisationsverfahren zum Polymerisieren von α-Olefin(en) unter Verwendung von auf teilchenförmigen Material aufgebrachten Metallocenkatalysator in einem Gasphasen-Wirbelbettreaktor, wobei ein Rückführungsstrom mit einer flüssigen und einer Gasphase in den Reaktor eingebracht wird, so dass der Gewichtsprozentsatz der Flüssigkeit, bezogen auf das Gesamtgewicht des Rückführungsstroms, größer als 2,0 Gew.% ist und der Rückführungsstrom eine taupunkterhöhende Komponente in einer Menge von mehr als 2,0 Mol.% aufweist.

2. Verfahren nach Anspruch 1, bei dem ein Rückführungsstrom, der ein Wirbelbett in dem Reaktor passiert, eine taupunkterhöhende Komponente in einer Menge von 5 bis 60 Mol.% umfasst, wobei die Komponente mindestens ein Kohlenstoffatom weniger als das höchste α-Olefin in dem Strom aufweist.

3. Verfahren gemäß Anspruch 2, bei dem die Rückführungszusammensetzung ein Comonomer enthält und auf einem Verhältnis von Cₓ/C_{y} von weniger als 0,2 gehalten wird, wobei Cₓ und C_{y} die Molprozente von Comonomer und Monomer sind, und 5 bis 40 Mol.% der taupunkterhöhenden Komponente umfasst.

4. Verfahren gemäß Anspruch 3, bei dem der Rückführungsstrom ferner Wasserstoff (H₂) im Molverhältnis H₂/C_{y} von weniger als 0,01 in einer Menge von 10 Mol.ppm bis 10 000 ppm umfasst.

5. Verfahren gemäß den Ansprüchen 3 und 4, bei dem die Zusammensetzung des Rückführungsstroms ein Verhältnis von (Cₓ+H₂)/C_{y} von weniger als 0,2, vorzugsweise weniger als 0,1 hat.

6. Verfahren nach einem der vorhergehenden Ansprüche, bei dem der Gewichtsprozentsatz an Flüssigkeit, bezogen auf das Gesamtgewicht des Rückführungsstroms, mehr als 2,5%, 5 Gew.% bis 50 Gew.%, insbesondere über 20 Gew.% beträgt, bezogen auf das Gesamtgewicht des Rückführungsstroms.

7. Verfahren nach einem der vorhergehenden Ansprüche, bei dem der Metallocenkatalysator ein Reaktivitätsverhältnis von weniger als 2 hat.

8. Verfahren nach einem der vorhergehenden Ansprüche, bei dem die Produktivität des Metallocenkatalysators mehr als 2000 gramm Polymer je gramm des Katalysators ist.

9. Verfahren nach einem der vorhergehenden Ansprüche, bei dem der Molprozentsatz an α-Olefinmonomer 10 bis 90 %, vorzugsweise 20 bis 80 % beträgt, wobei vorzugsweise der höchste Partialdruck im Bereich von 70 psia (482,8 kPaa) bis 240 psia (1655,2 kPaa) beträgt.

10. Verfahren nach Anspruch 9, bei dem der Rückführungsstrom ferner Stickstoff in einer Menge von 5 bis 50 Mol.% umfasst.

11. Verfahren nach Anspruch 9, bei dem das Polymerprodukt einen CDBI (Breitenindex der Zusammenseztungsverteilung) von mehr als 50 % hat und/oder eine Dichte im Bereich von 0,850 g/cm³ bis 0,970 g/cm³ hat und/oder einen Schmelzindex von mindestens 0,01 dg/Min und weniger als 1000 dg/Min hat.

12. Verfahren nach einem der Ansprüche 3 bis 11, bei dem mindestens zwei α-Olefinmonomere C₄- und C₂-α-Olefine in einem Verhältnis von 0,0001 bis 0,2 sind oder bei dem mindestens zwei α-Olefinmonomere C₅- und C₂-α-Olefine in einem Verhältnis von 0,001 bis 0,15 sind oder bei dem mindestens zwei α-Olefinmonomere C₆- und C₂-α-Olefine in einem Verhältnis von 0,001 bis 0,1 sind oder bei dem mindestens zwei α-Olefinmonomere C₈- und C₂-α-Olefine in einem Verhältnis von 0,001 bis 0,05 sind.

13. Verfahren nach Anspruch 1 zur Polymerisation von Ethylen und mindestens einem copolymerisierbaren α-Olefincomonomer mit 3 bis 15 Kohlenstoffatomen in dem im kondensierten Modus betriebenen Gasphasen-Wirbelbettreaktor, bei dem in Stufen
a) der Rückführungsstrom mit einem Verhältnis von Cₓ/C₂ von weniger als 0,2, vorzugsweise weniger als 0,1, durch ein Wirbelbett in dem Reaktor geleitet wird, wobei die taupunkterhöhende Komponente in einer Menge von mehr als 2,0 Mol.% vorhanden ist und gegebenenfalls nicht kondensierbare inerte Materialien den Rest des Rückführungsstroms ausmachen, wobei Cₓ und C₂ die jeweiligen Molprozentsätze von Comonomer und Ethylen sind,
b) der Metallocenkatalysator unter reaktiven Bedingungen in den Reaktor eingebracht wird, um den Rückführungsstrom zu einem Polymerprodukt zu polymerisieren,
c) der Rückführungsstrom, der nicht umgesetzte Monomere enthält, aus dem Reaktor abgezogen wird,
d) zusätzliche Monomere in den Rückführungsstrom eingebracht werden, um polymerisierte Monomere zu ersetzen, um das Verhältnis in dem Rückführungsstrom aufrechtzuerhalten,
e) der Rückführungsstrom erneut in den Reaktor eingebracht wird, und
f) Polymer aus dem Reaktor abgezogen wird.

14. Verfahren nach Anspruch 13, bei dem der Metallocenkatalysator mit Alumoxan oder ionisch aktiviertem Komplex verwendet wird.

15. Verfahren nach einem der Ansprüche 13 oder 14, bei dem das Comonomer 1-Hexen ist und das Reaktivitätsverhältnis weniger als 2 ist, die Dichte des Polymerprodukts im Bereich von 0,88 g/cm³ bis 0,970 g/cm³ liegt und es einen Schmelzindex von 0,1 bis 1000 dg/Min hat, oder bei dem das Comonomer 1-Octen ist und das Reaktivitätsverhältnis weniger als 1 ist, die Dichte des Polymerprodukts im Bereich von 0,8888 g/cm³ bis 0,97 g/cm³ liegt und es einen Schmelzindex von 0,1 bis 1000 dg/Min hat.

16. Verfahren nach einem der Ansprüche 13 bis 15, bei dem das Molverhältnis von H₂/C₂ weniger als 0,01 beträgt.

17. Verfahren nach Anspruch 1 zur Polymerisation von Ethylen und mindestens einem copolymerisierbaren α-Olefincomonomer mit 3 bis 15 Kohlenstoffatomen in dem Gasphasen-Wirbelbettreaktor, bei dem in Stufen
a) der Rückführungsstrom mit einem Verhältnis von (Cₓ+H₂)/C₂ von weniger als 0,2 durch den Reaktor geleitet wird, wobei eine taupunkterhöhende Komponente in einer Menge von mehr als 2,0 Mol.% vorhanden ist und nicht kondensierbare inerte Materialien den Rest des Rückführungsstroms ausmachen, wobei Cₓ, H₂ und C₂ die jeweiligen Molprozentwerte von Comonomer, Wasserstoff und Ethylen sind,
b) der Metallocenkatalysator unter reaktiven Bedingungen in den Reaktor eingebracht wird, um den Rückführungsstrom zu Polymerprodukt zu polymerisieren,
c) der Rückführungsstrom, der nicht umgesetzte Monomere enthält, aus dem Reaktor abgezogen wird,
d) der Rückführungsstrom komprimiert und abgekühlt wird, um eine flüssige Phase und eine Gasphase zu bilden, so dass der Gewichtsprozentsatz an Flüssigkeit, bezogen auf das Gesamtgewicht des Rückführungsstroms, größer als 10 ist, und der Rückführungsstrom erneut in den Reaktor eingebracht wird,
e) in den Rückführungsstrom zusätzliche Monomere eingebracht werden, um polymerisierte Monomere zu ersetzen, um das Verhältnis des Rückführungsstroms aufrechtzuerhalten, und
f) Polymer aus dem Reaktor abgezogen wird.

18. Verfahren nach Anspruch 17, bei dem die Flüssigkeit und das Gas separat in den Reaktor eingebracht werden.

19. Verfahren nach Anspruch 17 oder 18, bei dem das Polymerprodukt eine Dichte von weniger als 0,910 g/cm³ und/oder einen Schmelzindex von mehr als 3 dg/Min hat.

## Revendications

1. Procédé de polymérisation continue en phase gazeuse pour la polymérisation d'une ou plusieurs alpha-olétines en utilisant un catalyseur à base de métallocène présent sur un support particulaire dans un réacteur à lit fluidisé en phase gazeuse, dans lequel un courant de recyclage comprenant une phase liquide et une phase gazeuse est introduit dans le réacteur de telle sorte que le pourcentage en poids de liquide sur la base du poids total du courant de recyclage soit supérieur à 2,0 % en poids, et le courant de recyclage comprend un constituant élevant le point de rosée en une quantité supérieure à 2,0 % en moles.

2. Procédé suivant la revendication 1, dans lequel un courant de recyclage passant à travers un lit fluidisé dans le réacteur comprend un constituant élevant le point de rosée en une quantité de 5 à 60 % en moles, ledit constituant ayant au moins un atome de carbone de moins que l'alpha-oléfine ayant le plus grand nombre d'atomes de carbone dans le courant.

3. Procédé suivant la revendication 2, dans lequel la composition de recyclage contient un comonomère et est maintenue à un rapport Cₓ/C_{y} inférieur à 0,2, Cₓ et C_{y} représentant les pourcentages en moles de comonomère et de monomère, et comprend 5 à 40 % en moles du constituant élevant le point de rosée.

4. Procédé suivant la revendication 3, dans lequel le courant de recyclage comprend en outre de l'hydrogène (H₂) en un rapport molaire H₂/C_{y} inférieur à 0,01, en une quantité de 10 ppm en moles à 10 000 ppm en moles.

5. Procédé suivant les revendications 3 et 4, dans lequel la composition du courant de recyclage est présente en un rapport de (Cₓ+H₂)/Cy inférieur à 0,2, de préférence inférieur à 0,1.

6. Procédé suivant l'une quelconque des revendications précédentes, dans lequel le pourcentage en poids de liquide sur la base du poids total du courant de recyclage est supérieur à 2,5 %, compris dans l'intervalle de 5 % en poids à 50 % en poids, notamment supérieur à 20 % en poids sur la base du poids total du courant de recyclage.

7. Procédé suivant l'une quelconque des revendications précédentes, dans lequel le catalyseur à base de métallocène a un rapport de réactivité inférieur à 2.

8. Procédé suivant l'une quelconque des revendications précédentes, dans lequel la productivité du catalyseur à base de métallocène est supérieure à 2000 grammes de polymère par gramme dudit catalyseur.

9. Procédé suivant l'une quelconque des revendications précédentes, dans lequel le pourcentage molaire de monomère alpha-oléfinique est compris dans l'intervalle de 10 à 90 %, de préférence de 20 à 80 %, de préférence avec la pression partielle comprise dans l'intervalle de 70 psia (482,8 kPaa) à 240 psia (1655,2 kPaa).

10. Procédé suivant la revendication 9, dans lequel le courant de recyclage comprend en outre de l'azote en une quantité de 5 à 50 % en moles.

11. Procédé suivant la revendication 9, dans lequel le produit polymère a und CDBI supérieur à 50 % et/ou a une masse volumique comprise dans l'intervalle de 0,850 g/cm³ à 0,970 g/cm³ et/ou a un indice de fluidité d'au moins 0,01 dg/min et inférieur à 1000 dg/min.

12. Procédé suivant l'une quelconque des revendications 3 à 11, dans lequel lesdits au moins deux monomères alpha-oléfiniques sont des alpha-oléfines en C₄ et C₂ en un rapport de 0,0001 à 0,2 ou dans lequel lesdits au moins deux monomères alpha-oléfiniques sont des alpha-oléfines en C₅ et C₂ en un rapport de 0,001 à 0,15 ou dans lequel lesdits au moins deux monomères alpha-oléfiniques sont des alpha-oléfines en C₆ et C₂ en un rapport de 0,001 à 0,1 ou bien dans lequel lesdits aux moins deux monomères alpha-oléfiniques sont des alpha-oléfines en C₈ et C₂ en un rapport de 0,001 à 0,05.

13. Procédé suivant la revendication 1 pour la polymérisation d'éthylène et d'au moins un comonomère alpha-oléfinique copolymérisable ayant 3 à 15 atomes de carbone dans un réacteur à lit fluidisé en phase gazeuse fonctionnant en mode condensé, ledit procédé comprenant les étapes consistant:
a) à faire passer le courant de recyclage à travers un lit fluidisé dans ledit réacteur, à un rapport Cₓ/C₂ inférieur à 0,2, de préférence inférieur à 0,1, avec le constituant élevant le point de rosée en une quantité supérieure à 2,0 % en moles et facultativement des substances inertes non condensables représentant le reste dudit courant de recyclage, Cₓ et C₂ représentant, respectivement, les pourcentages molaires de comonomère et d'éthylène;
b) à introduire le catalyseur à base de métallocène dans des conditions réactives dans ledit réacteur pour polymériser ledit courant de recyclage en un produit polymère;
c) à décharger du réacteur ledit courant de recyclage contenant les monomères n'ayant pas réagi;
d) à introduire dans ledit courant de recyclage des monomères supplémentaires pour remplacer les monomères polymérisés afin de maintenir ledit rapport dans ledit courant de recyclage;
e) à réintroduire ledit courant de recyclage dans ledit réacteur; et
f) à décharger ledit polymère dudit réacteur.

14. Procédé suivant la revendication 13, dans lequel le catalyseur à base de métallocène est utilisé avec un alumoxane ou un complexe activé ionique.

15. Procédé suivant la revendication 13 ou 14, dans lequel le comonomère consiste en hexène 1 et le rapport de réactivité est inférieur à 2, la masse volumique du produit polymère est comprise dans l'intervalle de 0,88 g/cm³ à 0,970 g/cm³ · et l'indice de fluidité est compris dans l'intervalle de 0,1 à 1000 dg/min, ou dans lequel le comonomère consiste en octène-1 et le rapport de réactivité est inférieur à 1, la masse volumique du produit polymère est comprise dans l'intervalle de 0,88 g/cm³ à 0,97 g/cm³ et l'indice de fluidité est compris dans l'intervalle de 0,1 à 1000 dg/min.

16. Procédé suivant l'une quelconque des revendications 13 à 15, dans lequel le rapport molaire H₂/C₂ est inférieur à 0,01.

17. Procédé suivant la revendication 1 pour la polymérisation d'éthylène et d'au moins un comonomère alpha-olefinique copolymerisable ayant 3 à 15 atomes de carbone dans un réacteur à lit fluidisé en phase gazeuse, ledit procédé comprenant les étapes consistant;
a) à faire passer le courant de recyclage à travers ledit réacteur à un rapport (Cₓ+H₂)/C₂ inférieur à 0,2, avec un constituant élevant le point de rosée en une quantité supérieure à 2,0 % en moles et des substances inertes non condensables représentant le reste dudit courant de recyclage, Cₓ, H₂ et C₂ représentant, respectivement, les pourcentages molaires de comonomère, d'hydrogène et d'éthylène;
b) à introduire le catalyseur à base de métallocène dans des conditions réactives dans ledit réacteur pour polymériser ledit courant de recyclage en un produit polymère;
c) à décharger du réacteur ledit courant de recyclage contenant les monomères n'ayant pas réagi;
d) à comprimer et refroidir ledit courant de recyclage pour former une phase liquide et une phase gazeuse de telle sorte que le pourcentage en poids de liquide sur la base du poids total du courant de recyclage soit supérieur à 10 et à réintroduire ledit courant de recyclage dans ledit réacteur;
e) à introduire dans ledit courant de recyclage des monomères supplémentaires pour remplacer les monomères polymérisés afin de maintenir ledit rapport dudit courant de recyclage; et
f) à décharger ledit polymère dudit réacteur.

18. Procédé suivant la revendication 17, dans lequel le liquide et le gaz sont introduits séparément dans le réacteur.

19. Procédé suivant la revendication 17 ou 18, dans lequel le produit polymère a une masse volumique inférieure à 0,910 g/cm³ et/ou un indice de fluidité supérieur à 3 g/min.
